# EUROPEAN PATENT APPLICATION

(11) **EP 1 199 626 A2**
(43) Date of publication of application: **24.04.2002**
(21) Application number: 01305329.3
(22) Date of filing: 19.06.2001
(51) Int. Cl.: G06F 1/32

(54) **Information communications device**

(30) Priority: 20.10.2000 GB 0257246
(71) Applicant: Pace Micro Technology PLC, Shipley, West Yorkshire BD18 3LF (GB)
(72) Inventor: Thompson, Peter, Oxenhope, Keighley BD22 9NA (GB)
(74) Representative: Wood, Graham

(57) **Abstract**

An information communications device (2) is provided which includes a power supply for operation of the device and means for receiving and/or storing data in the device. Processing means are provided for processing the received and/or stored data and audio and/or visual means are provided for communicating data to a user/audience. The device further includes sensing means (12) to signal to the device the presence of a person in the locality of the device, and on receipt of the signal, the device activates/deactivates one or more functions of the device accordingly. The device can be portable.

## Description

This invention relates to an information communication device.

Information communication devices are used in the home to display information thereon. The devices are typically located in a premises or prominent position in the house to allow user input of data, in addition to provision of information to the user in the form of advertisements, music, television programs, local services data, home shopping, retailer loyalty programs, special offers provided by retailers and/or the like. The devices are typically, although not exclusively, portable devices which can be moved to a suitable location in the premises.

A conventional information communications device typically comprises a power supply for operation of the device, a data receiver for receiving data from a remote source, data input means for allowing a user to input data into the device, memory means for storing data and microprocessing means for processing received and/or stored data. The device further includes visual and/or audio means for communicating data to a user/audience.

Problems encountered with conventional communication devices include the device being left in an operational mode for extended periods of time when there is no audience present to watch and/or listen to data being communicated via the device. This can result in increased power consumption and may also lead to a reduction in any battery back up support. Alternatively, a user may forget to switch the device on when in the vicinity of the same and so the device may become redundant or advertisers may lose valuable advertising time.

The components of the device which have a relatively short service life, such as electroluminescent backlighting for a display screen, may wear out needlessly when the device is in an operational mode but no audience is present. In addition, radio frequency bandwidth is typically being used to support applications when a user is not present to listen to them, thus preventing other uses being made of the bandwidth.

It is therefore an aim of the present invention to provide an information communication device which overcomes the abovementioned problems and which allows the control of power consumption and display of data according to whether there is a person present in the locality.

According to the present invention there is provided an information communications device including a power supply for operation of said device, means for receiving and/or storing data in said device, processing means for processing said received and/or stored data and audio and/or visual means for communicating data to a user/audience characterised in that the device includes sensing means to signal to the device the presence of a person in the locality of the device, and on receipt of said signal, said device activates/deactivates one or more functions of the device accordingly.

Preferably the device is portable.

Preferably the sensing means detects movement in the locality of the device. Once movement is detected by the sensing means, a signal is sent to the processing means which results in a change in the operational mode of the device. For example, when movement is detected this can result in the device being moved from a "standby" condition to an "on" condition, it can result in data being received via the receiver and/or result in data being communicated via the audio and/or visual means.

Preferably a display screen is provided for the display of visual data and/or speakers are provided for the transmission of audio data.

In one embodiment the sensing means is located on the device. In an alternative embodiment the sensing means is provided on or communicating with a cradle/holder in which the device is located when not in use.

Preferably the area over which the sensing means is operable can vary according to the location in which the device is to be placed, it can be determined by the user and/or determined by the broadcaster.

Preferably a timer is provided in communication with the sensing means such that if movement in the locality of the device is not detected after a pre-determined time interval, the device moves from an "on" condition to a standby condition, the device can stop receiving data and/or audio/visual data is not communicated via the device. Further functions can also be activated/deactivated according to the available functions of the communications device. For example, the backlighting can be switched off when the device does not detect movement in the locality of the same.

In one embodiment the time interval which passes before the device moves to a standby condition is set by the manufacturer. In an alternative embodiment the time interval is set by the user.

Preferably the sensing means option can be switched on/off by a user.

Preferably the processing means can be used to collect data from the sensing means relating to the times of day when most activity occurs in the locality of the device. The information collected can be used to allow the device to be automatically switched on during these periods of predicted activity, irrespective of whether a user is actually detected in the locality. The device can also be automatically switched off or moved to a standby condition when a period of predicted inactivity occurs.

In addition, the information collected on activity in the locality of the device can be used to allow a broadcaster to target specific advertising to certain times of the day. For example, if a sensing device is registered for use in a home premises and frequently senses movement in the locality of the device during the working day, this may suggest that there is a housewife in the household and the broadcaster may target advertising during these periods to products that a housewife may be interested in.

The information communications device can receive and/or send information to a remote location via a broadcast data receiver and/or via a communications link such as a telecommunications link.

An advantage of the present invention is that by having the information communication device in an operational mode only during a pre-determined time interval when an audience is detected in the locality of the device, this reduces the power consumption of the device, thereby making the device less expensive to use. In addition, short life service components, such as backlighting components for the display screen of the device are not worn out unnecessarily by the device being used when there is no audience present. This allows potentially cheaper and lower power consuming technologies to be used which are not possible for use with conventional devices.

Since information does not need to be conveyed from the device until a user is in the locality of the device, this has the advantage of reducing bandwidth requirements on the communications network used to transmit data to the device (e.g., reduce the bandwidth requirement of a DECT RF link when no one is in the vicinity of the device).

Furthermore, services provided by the information conveying device such as 'message waiting' notification can be provided with for example, an audible signal, which can be sounded when a user is detected in the locality of the device. This allows the device to signal a message is waiting when there is someone around that may be able to read the message.

An embodiment of the invention will now be described with reference to the accompanying figures wherein:

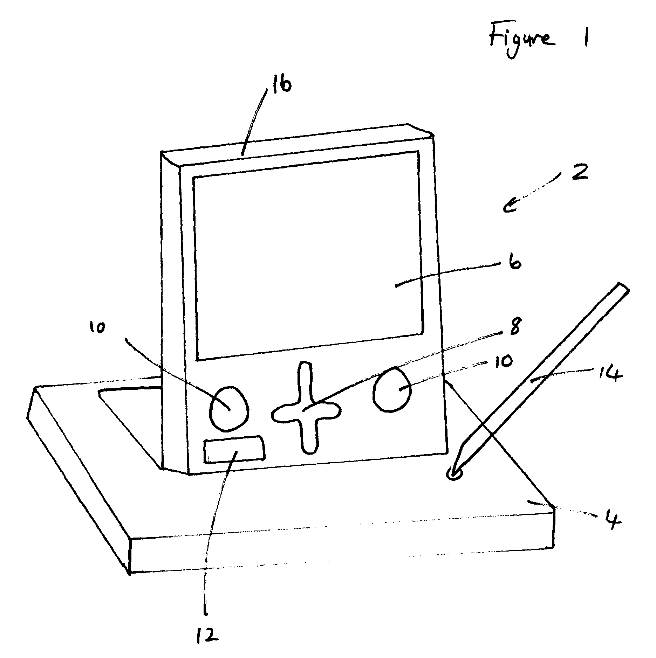

Figure 1 is a schematic representation of the information display.

Referring to Figure 1 there is illustrated an information communication device 2 which is held in a cradle/stand 4. The device 2 comprises a display screen 6, control keys 8 and 10, and sensing means in the form of a movement sensor 12.

The control keys 8 and 10 and/or a "pen" 14 are provided to allow a user to input data into the device by entering appropriate codes, words and/or the like.

The housing 16 of the device typically includes a receiver for receiving data from a remote source. This can be in the form of a wireless receiver for receiving radio broadcasts, or alternatively or in addition, the device can be provided with a cable connection. The housing also encases a processing means for processing received data and allowing the data to be displayed on the display screen 6, a memory means for storing data therein and a power supply.

The power supply can include a mains power supply and/or a rechargeable battery supply.

The data receiver of the device is used in the premises to allow reception of broadcast data from a remote location, typically via cable, terrestrial or satellite systems. A range of television programmes can also be made available for selection by a user. In addition, the data receiver typically includes a communications link, such as a telecommunications link.

The information conveying device can be used by the user to input data therein. The data can relate to information personal to the user, such as contact details of friends, family and acquaintances or copies of recipes and/or the like. A bar code scanner can be provided which allows barcodes of products to be read, thus storing data on those products. Speakers can be provided with the device to allow audio to be played from the same, such as a radio channel, messages to be played from a telephone link or e-mail messages to be displayed.

If the device is connected to a particular retail outlet, the device can be used to allow a user to shop and order products from the same. In addition, the retailer or broadcaster can provide advertising on the device either via audio or visual means.

The device may be left in an "on" condition for extended periods of time when there is no audience present to view or listen to information being provided by the device. This is undesirable due to the power consumption used during these times of non-use and this is both expensive and can result in a reduction in the power provided by the battery back up support. In addition, components used in the device typically having a short service life wear out needlessly.

In order to overcome the above problems, the device of the present invention includes the movement sensor 12 which detects movement in the locality of the device 2. Once movement is detected, a signal is sent to the processing means of the device and functions of the device can be activated accordingly. This may include the device being moved from a "standby" condition to an "on" condition, the initiation of data being received via the data receiver and/or display of data on the display screen.

It will be understood that a number of other functions may become operational when movement in the locality of the device is detected by the sensor 12.

A timer can be provided in the device to allow a pre-determined time period to pass from when movement was last sensed in the locality of the device prior to the device moving to a "standby" condition or one or more functions of the device becoming inactive. This pre-determined time interval can be controlled by the manufacturer of the device, by the user and/or by the broadcaster.

The movement sensor can include any of Passive Infra-red Detection (PIR), Microwave Doppler Detection or Charged Coupled Device (CCD)/Complementary Metal Oxide Semiconductor (CMOS) imaging detection.

PIR detection identifies movement by sensing changes in the invisible infrared energy emitted within a two dimensional space, covered within the field of view of the sensor. For example, if a portion of the heat emitted from a human body falls within the infrared part of the spectrum, the device is activated.

Microwave Doppler Movement Detection identifies movement of an object by using a transmitter to emit a fixed frequency beam from the device within the microwave part of the frequency spectrum. If an object within the path of the beam moves, it will result in a frequency change in the energy emitted back to the device from the moving object, which in turn is identified as a movement within the receiving part of the detector.

CCD/CMOS movement detection is based on light sensitive elements which are capable of storing electrical charge. The electrical charge varies according to the number of photons striking the elements. A lens placed in front of the imaging sensor can focus on an image in the target area. The charge from each element is then read and digitised into a sequence of images frames, which can then be processed digitally to detect the movement of an object within the field of view of the sensor.

It is noted that other forms of movement sensors can be used.

Operation of the sensing means on the device is optional and can be switched on/off by the user accordingly. The sensor can also be placed on the cradle 4 of the device 2 if required.

Thus it can be seen from the above description that the present invention provides a means of managing the power consumption and power service life of an information communications device, in addition to allowing a broadcaster to improve the targeting of information/advertising to a user.

## Claims

1. An information communications device (2) including a power supply for operation of said device, means for receiving and/or storing data in said device, processing means for processing said received and/or stored data and audio and/or visual means for communicating data to a user/audience **characterised in that** the device includes sensing means (12) to signal to the device the presence of a person in the locality of the device, and on receipt of said signal, said device activates/deactivates one or more functions of the device accordingly.

2. A device according to claim 1 **characterised in that** the device (2) is portable.

3. A device according to claim 1 **characterised in that** the sensing means (12) detects movement in the locality of the device (2).

4. A device according to claim 1 **characterised in that** the processing means of said device (2) receives a signal from the sensing means (12) and the processing means subsequently initiates a change in the operational mode of the device (2).

5. A device according to claim 1 **characterised in that** the sensing means (12) is located on the device (2).

6. A device according to claim 1 **characterised in that** the sensing means (12) is located on a cradle or holder (4) of the device (2).

7. A device according to claim 1 **characterised in that** range over which the sensing means (12) operates is determined by the broadcaster and/or user.

8. A device according to claim 1 **characterised in that** a timer is provided on or connected to the device (2) and said timer communicates with the sensing means (12) so that if no movement is detected in the locality of the device for a pre-determined period of time, one or more functions of the device are activated/deactivated.

9. A device according to claim 8 **characterised in that** if no movement is detected in the locality of the device (2), the device is moved from an on condition to an off or standby condition.

10. A device according to claim 8 **characterised in that** the pre-determined period of time is set by the manufacturer or user.

11. A device according to claim 1 **characterised in that** the user is able to switch the sensing means (12) of the device (2) on or off.

12. A device according to claim 1 **characterised in that** the device (2) receives information from a remote location and/or sends information to a remote location via a communications link.

13. A device according to claim 1 **characterised in that** if the device (2) receives a message for a user, the device stores the message until a person is detected within the locality of the device and the device then emits an indication that a message is waiting.

14. A device according to claim 13 **characterised in that** the indication is an audible signal.

15. A device according to claim 1 **characterised in that** the sensing means includes any of passive infra-red detection, microwave Doppler detection or charged coupled device/complementary metal oxide semiconductor imaging detection.
